(19) Europäisches Patentamt / European Patent Office / Office européen des brevets

(11) **EP 2 860 661 A1**

(12) **EUROPEAN PATENT APPLICATION**

(43) Date of publication:
15.04.2015 Bulletin 2015/16

(51) Int Cl.:
*G06K 9/00* (2006.01)　　*G06K 9/46* (2006.01)

(21) Application number: 13187850.6

(22) Date of filing: **09.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Delphi Technologies, Inc.**
**Troy, Michigan 48007 (US)**

(72) Inventors:
- **Nunn, Christian Markus**
  **42499 Hückeswagen (DE)**
- **Schugk, Daniel**
  **42105 Wuppertal (DE)**

(74) Representative: **Manitz, Finsterwald & Partner GbR**
**Martin-Greif-Strasse 1**
**80336 München (DE)**

(54) **Mean shift tracking method**

(57)　The invention relates to a method of positioning a bounding box surrounding an object of interest in an image, in particular a monochrome video frame, comprising the steps of: detecting an object of interest in the image and positioning a bounding box at an initial position around the object of interest; determining a group of Histogram of Oriented Gradient (HoG) features based on image cells located within the bounding box; building a candidate model histogram by matching each of the HoG features to centers of a plurality of clusters, comparing the candidate model histogram to a target model histogram; and using a mean shift procedure to displace the bounding box in the image until a desired conformity between the candidate target model histogram and the target model histogram is reached.

EP 2 860 661 A1

**Description**

This invention relates to the field of detecting and tracking an object of interest, e.g. a pedestrian or a vehicle, in a series of images using a mean shift procedure.

The tracking of an object in a series of images, e.g. video frames, by means of a mean shift procedure is generally known and commonly used in connection with colour image sensors in the field of object tracking and image segmentation, using the pixel intensities as features. Typically the mean shift procedure is used as an inter-frame method as follows: An object is detected in a current frame and a target model is extracted. Using the mean shift procedure, an image region most similar to the target model is then determined in the next frame. More specifically, the mean shift approach is based on finding the center of gravity of a probability density function (PDF, e.g.: colour histogram of image region) by estimating the gradient of the PDF iteratively. In combination with similarity measures for PDFs or histograms like the Bhattacharyyan coefficient, the mean shift procedure can be used to relocate and track objects that were modeled before.

The standard mean shift procedure and its variations show good performances in robust object tracking in colour applications but have never been adapted successfully to monochrome image sensors with consistently good results and performances. Pedestrians in particular can be very different in their visual appearance so that pixel intensities which are commonly used in mean shift procedures are not suitable to adequately describe pedestrians in a monochrome framework.

It is an object of the invention to provide a mean shift tracking method that allows more accurate and reliable tracking of objects, in particular in monochrome images.

This object is satisfied by a method in accordance with claim 1.

A method of the invention comprises the steps of: detecting an object of interest in an image and positioning a bounding box at an initial position around the object of interest; determining a group of Histogram of Oriented Gradient (HoG) features based on image cells located within the bounding box; building a candidate model histogram by matching each of the group of HoG features to centers of a plurality of clusters; comparing the candidate model histogram to a target model histogram; and using a mean shift procedure to displace the bounding box in the image until a desired conformity between the candidate target model histogram and the target model histogram is reached.

A general idea of the invention is to use HoG features clustered by a Bag of Words algorithm as input for a mean shift procedure, wherein the HoG features can either be randomly generated or placed on a grid. The use of HoG features instead of pixel intensities for the target and candidate modeling makes a reliable detection, tracking and classification of objects, in particular of pedestrians, possible even in monochrome images. The combination of the mean shift procedure and the HoG features can be used for the fine positioning of bounding boxes in state of the art pedestrian detection systems. Furthermore, it is possible to use the method of the invention for pedestrian tracking. For this purpose the target model histogram can either be a general target model histogram that has previously been trained offline, or it can be determined from a previous image provided by the camera. While the first model can handle changes due to pose or illumination, the second model makes different pedestrian separable.

Since HoG features have become a standard for pedestrian detection and, thus, need to be provided to the detector for the detection of an object and positioning of the bounding box anyway, no additional data have to be acquired or calculated for the target and candidate modeling. Hence, the proposed method can overcome current tracking methods in accuracy by an acceptable minimum amount of additional processing power.

Whilst the invention improves the accuracy of pedestrian detection in monochrome video frames, it is to be understood that it can also be applied to other objects or other areas, e.g. vehicle tracking, and that it can also be used on polychrome, i.e. colour video frames.

If the method of the invention is used for object tracking, the target model histogram is preferably trained online, i.e. in the course of the tracking process, based on a previous image, for example, the image in which an object of interest to be tracked is detected for the first time. In this case, building the target model histogram includes the steps of: detecting an object of interest in the previous image and positioning a bounding box around the object of interest; determining a plurality of HoG features based on image cells randomly sized and positioned in the previous image; clustering the plurality of HoG features via a k-means algorithm into a plurality of clusters, this being the plurality of clusters that will also be used for building the candidate model histogram; and selecting a group of HoG features that are based on image cells located within the bounding box and matching each of the group of HoG features to the centers of the plurality of clusters.

If the method of the invention is used to fine position a bounding box around an object of interest, the target model histogram is preferably trained offline, i.e. prior to the fine positioning process, based on a database of example images. More specifically, the target model histogram can be built by: providing a plurality of given example images; determining a plurality of HoG features based on image cells randomly sized and positioned in each of the example images; clustering the pluralities of HoG features, i.e. all of the HoG features via a k-means algorithm into the plurality of clusters, this being the same plurality of clusters that will be used for building the candidate model histogram; for each individual example image: detecting an object of interest in the image and positioning a bounding box around the object of interest; building an individual target model histogram by selecting a group of HoG features that are based on image cells located within the bounding box and matching each of the group of HoG features to the centers of the plurality of clusters; and summing up all of the individual target models to build a global target model histogram.

In either case, the accuracy of the target model histogram can be further improved by weighting the group of HoG features with a kernel function depending on the distance of the respective HoG feature from the center of the bounding box. HoG features located at a greater distance from the center of the bounding box can, for example, be assigned a smaller weight since it is more likely that these HoG features belong to the background rather than the object of interest. The weighting of the group of HoG features therefore significantly improves the modeling process and thus the tracking accuracy.

Alternatively or additionally, it is conceivable to introduce a position voting into the modeling process in order to overcome the spatial independency of the target model histogram and thereby further improve the accuracy of the target model histogram. To this end, building the target model histogram preferably comprises applying a voting algorithm, in particular a Hough voting algorithm, to the group of HoG features in order to displace each of the group of HoG features towards the center of the bounding box. The voting algorithm may comprise the step of displacing each of the group of HoG features of the group towards the center of the bounding box by previously determined displacement vectors respectively associated with the clusters to which the HoG features have been matched. The displacement vectors can, for example, be determined offline by determining a plurality of HoG features in a plurality of example images; clustering the HoG features via a k-means algorithm into the plurality of clusters; assigning a typical location within a bounding box to the HoG features of each cluster, the position of this typical location relative to the center of the bounding box defining the displacement vector associated with the cluster.

Further alternatively or additionally, building the target model histogram may comprise weighting the group of HoG features with a previously built background model histogram. For example, the background model histogram can be built based on HoG features taken from negative example images and/or from background regions surrounding an image region containing an object of interest. Furthermore, the background model histogram can be weighted with a classifier that has been trained on a negative example database.

According to a further embodiment, the mean shift procedure comprises calculating a weight function for every histogram bin by forming a quotient of the respective target model and candidate model histogram bins. The weight function can then be used to calculate a bounding box displacement vector based on a weighted mean distance of the group of HoG features from the center of the bounding box, and the position of the bounding box can be shifted by the bounding box displacement vector.

Preferably, the mean shift procedure is repeated iteratively until convergence of the target model and candidate model histograms are reached or a maximum number of iterations is reached. Convergence can, for example, be defined by reaching a predetermined Bhattacharyya coefficient and/or a bounding box displacement vector reaching a predetermined minimum.

In this connection it is advantageous if the position of the bounding box is shifted not only by the bounding box displacement vector but also by an additional inertia term consisting of a previously calculated bounding box displacement vector multiplied by a predetermined weighting factor. The introduction of the inertia term leads to a higher robustness for convergence and accuracy of the mean shift procedure, and it reduces the average iteration number and accelerates the mean shift procedure by overcoming the problem of getting stuck in local maxima or saddle points.

Preferred embodiments of the invention are described in the following description and in the accompanying drawings.

Fig. 1    shows an image containing a pedestrian of interest surrounded by a bounding box, in which a plurality of randomly selected image regions for HoG feature calculation are marked as circles.

Fig. 2    shows a target model histogram comprising 500 histogram bins determined by k-means clustering of all the HoG features calculated in the image of Fig. 1, wherein only those HoG features that are located inside the bounding box have been voted for one of the histogram bins.

An exemplary embodiment of the invention will be described in more detail on the basis of a pedestrian detection system implemented in a vehicle and comprising a video camera which captures an area surrounding the vehicle, typically in front of the vehicle, and which provides a series of corresponding images, so called video frames. In the present example, the video camera is a monochrome video camera and thus provides monochrome images. However, it is to be understood that the method of the invention works as well with polychrome images provided by a colour video camera.

The images provided by the video camera are analysed by an image analysing module installed on the vehicle and connected to the video camera. The image analysing module is also connected to a central processing unit of the vehicle to allow further use of the results of the image analysis. For example, if the result of the image analysis is detection of a pedestrian entering the pathway of the moving vehicle, the vehicle may brake automatically.

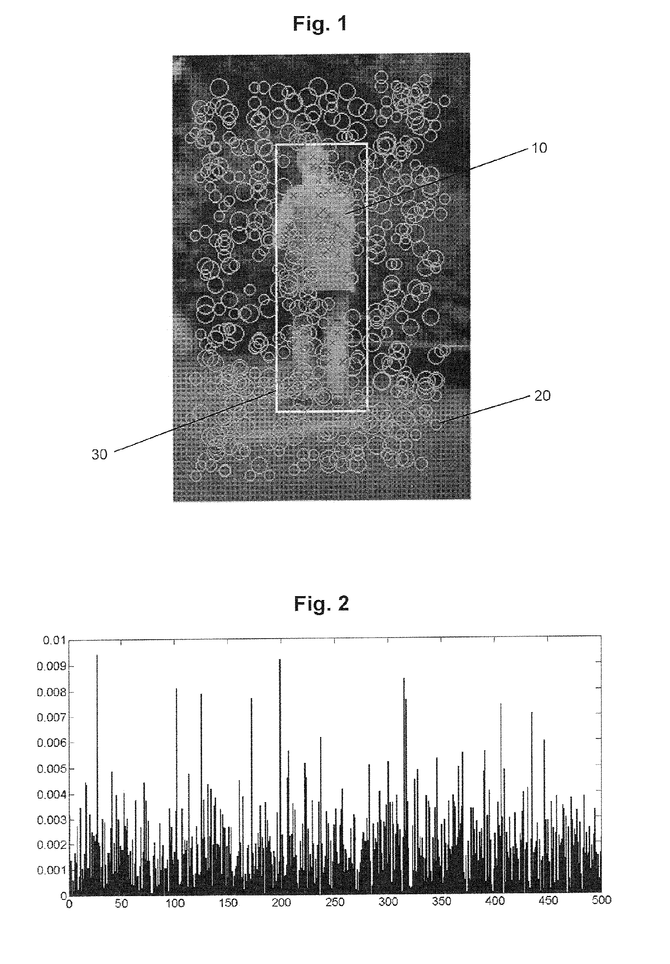

The image analysing module comprises a conventional detector for the detection of any objects of interest in the images provided by the video camera, in the present example of pedestrians. The detector is trained to search for pedestrians in the image by scanning the whole image and recognizing a pedestrian if the image features inside the local search window meet certain criteria. If the detector detects an object of interest, i.e. a pedestrian, the detector positions a bounding box 30 around the detected pedestrian 10 (Fig. 1).

In the present case, the detector scans the image based on Histogram of Oriented Gradient (HoG) features which are calculated from the image gradients of randomly positioned and randomly sized image cells 20, each having a minimum width and minimum height of four pixels. The gradients are calculated pixelwise and summarized in a y - dimensional histogram based on their orientation and are weighted by their magnitude. In order to generate more powerful HoG features, the image cells 20 are separated into l Blocks on which additional histograms are calculated, thus resulting in a (1+1)xy - dimensional HoG feature vector.

Once the detector has positioned a bounding box 30 around a pedestrian 10, a target model histogram describing the pedestrian 10 will be determined. To this end the recorded HoG features are passed to a Bag of Words algorithm and clustered via a k-means algorithm into N clusters. Preferably, N is in the order of $10^2$, for example N may equal 500.

In a next step, only those HoG features which belong the pedestrian 10, i.e. which are based on image cells 20 located within the bounding box 30, this being 1...m...M features, are selected and matched to the centers $c_{id}$ of the N clusters, each of the N clusters corresponding to a histogram bin of the resulting target model histogram q (Fig. 2).

In order to improve the accuracy of the target model histogram q, the HoG features are weighted with a kernel function k depending on the distance of the respective image cell 20 from the center of the detected pedestrian 10:

$$q = q_n\{1 \dots n \dots N\}$$

with

$$q_n = \frac{1}{A} \times \sum_{i=1}^{M} \delta\big(n - c_{id}(HoG_i)\big) \times k\left(\left\|\frac{(\boldsymbol{BB}_c - C_{HoG_i})}{\boldsymbol{BB}_{(h,w)}}\right\|\right)$$

wherein

A is a normalization constant so that $\sum q_n$ = 1;
q is the target model, it is equivalent to a probability density distribution;
$q_n$ is the probability of the n-th feature-cluster in the target model;
N is the number of histogram model bins and equal to the number of cluster centers;
$c_{id}$ is the cluster center ID;
$c_{id}(HoG_i)$ is the function that matches the current i-th feature to the cluster center and thus to the histogram bin;
k is a kernel function;
$\delta$ is the kroenecker delta function;
$BB_c$ is the center position of the object in pixel coordinates;
$BB_{(h,w)}$ is the size of the object, defined by its height and width; and
$C_{HoG_i}$ is the center position of the i-th feature.

The target model histogram q is further tuned by means of a separately calculated background model histogram b which is either computed online on the basis of HoG features from background regions surrounding the detected pedestrian 10, or which has previously been computed on the basis of HoG features determined from negative example images and/or on the basis of HoG features determined from background regions surrounding image regions containing pedestrians in example images. The background model histogram b is used as an additional weighting function to reduce the influence of common background features in the target model calculation:

$$b = b_n\{1 \dots n \dots N\}$$

with

$$b_n = \frac{1}{A_{back}} \times \sum_{i=1}^{M_{back}} \delta\left(n - c_{id}(HoG_i)\right)$$

and

$$q_n^* = \frac{1}{A} \times b_n^* \times \sum_{i=1}^{M} \delta\left(n - c_{id}(HoG_i)\right) \times k\left(\left\|\frac{(BB_c - C_{HoG_i})}{BB_{(h,w)}}\right\|\right)$$

with

$$b_n^* = \min\left(\frac{b_{min}}{b_n}, 1\right)$$

wherein

$M_{back}$ is the number of features that are used for background model calculation;
$A_{back}$ is a normalization constant, so that $\sum b_n = 1$;
b is the background model, it is equivalent to a probability density distribution;
$b_n$ is the probability of the n-th feature-cluster in the background model b;
$b_{min}$ is the minimum of the non-zero elements of b; and
$q_n^*$ is the target model weighted with the background model.

A general drawback of this background adaption is the uncertainty of the criteria deciding if a feature is part of a pedestrian or not. In particular in the event that a pedestrian of interest is surrounded by background containing further pedestrians, errors can be introduced into the modelling. In order to overcome this problem a strong classifier which can decide if a HoG feature is part of the pedestrian or not, has previously been trained on an example database. In the case of uncertainty the classifier value can be used as a weighting function to reduce the influence of background features in the modelling of the target model histogram q.

In a subsequent image provided by the video camera, the process of determining HoG features is repeated and a candidate bounding box 30 is initially positioned at the same position as the bounding box 30 in the image in which the pedestrian 10 was first detected, the candidate bounding box 30 indicating a candidate, i.e. a pedestrian that is likely to correspond to the previously detected pedestrian 10.

Starting from this initial position, a histogram is calculated in the same way as the target model histogram q, however, based only on those HoG features whose underlying image cell is located inside the candidate bounding box 30. The calculated histogram is normalized, resulting in a candidate model histogram p.

In a next step a weight function w is calculated for every histogram bin by the quotient of the target model histogram q and the candidate model histogram p:

$$w_n = \sqrt{\frac{q_n}{p_n}}$$

The calculated weights $w_n$ are used in a mean shift procedure to calculate a weighted mean over the HoG feature positions inside the candidate bounding box 30 relative to the centre $BB_c$ of the candidate bounding box 30. The so calculated mass centre defines a displacement vector d for the candidate bounding box 30:

$$d_j = \sum_{i=1}^{M} \frac{\left(C_{HoG_i} - BB_c^j\right) \times w^j\left(c_{id}(HoG_i)\right) \times g\left(\left\|\frac{C_{HoG_i} - BB_c^j}{BB_{(h,w)}^j}\right\|\right)}{w^j\left(c_{id}(HoG_i)\right) \times g\left(\left\|\frac{C_{HoG_i} - BB_c^j}{BB_{(h,w)}^j}\right\|\right)}$$

wherein $d_j$ is the displacement vector of the j-th iteration and $g = -k'$.

In a next step the candidate bounding box 30 is displaced by the displacement vector d as follows

$$BB_c^{j+1} = BB_c^j + d_j$$

and the steps of building a candidate model histogram p, calculating a weight function and determining a displacement vector d are repeated based on the displaced candidate bounding box 30.

This procedure is repeated iteratively until convergence of the target model and candidate model histograms or a maximum number K of iterations k is reached. Convergence can be defined either by reaching a predetermined Bhattacharyya coefficient which describes the similarity between two histograms or PDFs, or by the displacement vector d reaching a predetermined minimum, thus ensuring that displacements of the centre of the candidate bounding box 30 are significant.

In order to overcome the problem of getting stuck in local maxima or saddle points, an additional inertia term is included in the mean shift procedure. This inertia term consists of the previous displacement vector $d_{j-1}$ multiplied by a weighting factor $\alpha$, to add a velocity like term to the mean shift procedure:

$$BB_c^{j+1} = BB_c^j + d_j + d_{j-1} \times \alpha$$

Achieving convergence not only means that the candidate actually corresponds to the previously detected pedestrian 10, but also ensures that the candidate bounding box 30 will be positioned in a most accurate position, which makes more accurate predictions concerning future movements of the detected pedestrian 10 possible.

In order to track the detected pedestrian 10 the procedure of pedestrian detection, candidate model histogram building and fine positioning of the candidate bounding box 30 will be repeated on subsequent images provided by the video camera.

It is to be noted that the method described above can not only be used to track objects of interest in a series of images provided by a video camera, but also to improve the detecting of an object of interest and positioning a corresponding bounding box in a single image provided by a camera.

In this case the required target model histogram q will not be built from a previous image provided by the camera, i.e. the target model histogram will not be a current target model histogram, but instead a global target model histogram q describing a typical pedestrian will be used, which has previously been built offline on the basis of a pedestrian database, i.e. a plurality of example images containing pedestrians.

In order to build this global target model histogram q a plurality of HoG features is determined throughout the example images based on image cells randomly sized and randomly positioned in the example images. The recorded HoG features are then passed on to a Bag of Words algorithm and clustered via a k-means algorithm into the aforementioned N clusters.

In a next step, from all of the example images only those HoG features which belong to pedestrians, i.e. which are based on image cells located within corresponding bounding boxes 30, this being 1...m...M features, are selected and matched to the centers $c_{id}$ of the N clusters, each of the N clusters corresponding to a histogram bin of the resulting global target model histogram q.

In order to improve the accuracy of the global target model histogram q, the HoG features are weighted with a kernel function k as described above. Similarly, the global target model histogram q can be further tuned by means of a separately calculated background model histogram b which has previously been computed on the basis of HoG features of negative example images and/or on the basis of HoG features from background regions surrounding image regions containing pedestrians, for instance, in the example images.

The resulting global target model histogram q can then be used to calculate a weight function w for every histogram bin by the quotient of the target model histogram q and the candidate model histogram p, and to fine position the candidate bounding box 30 initially positioned by the detector around an object of interest in the image provided by the camera using the mean shift procedure described above.

**Claims**

1.  A method of positioning a bounding box surrounding an object of interest in an image, in particular a monochrome video frame, comprising the steps of:

    detecting an object of interest (10) in the image and positioning a bounding box (30) at an initial position around the object of interest (10);
    determining a group of Histogram of Oriented Gradient (HoG) features based on image cells (20) located within the bounding box (30);
    building a candidate model histogram by matching each of the group of HoG features to centers of a plurality of clusters;
    comparing the candidate model histogram to a target model histogram; and
    using a mean shift procedure to displace the bounding box (30) in the image until a desired conformity between the candidate target model histogram and the target model histogram is reached.

2.  The method of claim 1, wherein the target model histogram is built offline by:

    providing a plurality of given example images;
    determining a plurality of HoG features based on image cells (20) randomly sized and positioned in each of the example images;
    clustering the pluralities of HoG features via a k-means algorithm into the plurality of clusters;
    for each individual example image: detecting an object of interest (10) in the image and positioning a bounding box (30) around the object of interest (10); building an individual target model histogram by selecting a group of HoG features that are based on image cells (20) located within the bounding box (30) and matching each of the group of HoG features to the centers of the plurality of clusters; and
    summing up all of the individual target models.

3.  The method of claim 1, wherein the target model histogram is built online based on a previous image by:

    detecting an object of interest (10) in the previous image and positioning a bounding box (30) around the object of interest (10);
    determining a plurality of HoG features based on image cells (20) randomly sized and positioned in the previous image;
    clustering the plurality of HoG features via a k-means algorithm into the plurality of clusters; and
    selecting a group of HoG features that are based on image cells (20) located within the bounding box (30) and matching each of the group of HoG features to the centers of the plurality of clusters.

4.  The method of claim 2 or 3, wherein the step of building the target model histogram comprises weighting the group of HoG features with a kernel function depending on the distance of the respective HoG feature from the center of the bounding box (30).

5.  The method of any one of claims 2 to 4, wherein the step of building the target model histogram comprises weighting the group of HoG features with a previously built background model histogram.

6.  The method of claim 5, wherein the background model histogram is built based on HoG features taken from negative example images and/or from background regions surrounding an image region containing an object of interest.

7. The method of claim 5 or 6, wherein the background model histogram is weighted with a classifier that has been trained on a negative example database.

8. The method of any one of claims 2 to 7, wherein the step of building the target model histogram comprises applying a voting algorithm, in particular a Hough voting algorithm, to the group of HoG features in order to displace the group of HoG features towards the center of the bounding box (30).

9. The method of claim 8, wherein the voting algorithm comprises the step of displacing the group of HoG features towards the center of the bounding box (30) by previously determined displacement vectors respectively associated with the clusters to which the group of HoG features has been matched.

10. The method of claim 9, wherein the displacement vectors have been determined offline by determining a plurality of HoG features in a plurality of example images; clustering the pluralities of HoG features via a k-means algorithm into the plurality of clusters; assigning a typical location within a bounding box to the HoG features of each cluster, the position of this typical location relative to the center of the bounding box (30) defining the displacement vector associated with the cluster.

11. The method of any one of the preceding claims, wherein the mean shift procedure comprises calculating a weight function for every histogram bin by forming a quotient of the respective target model and candidate model histogram bins.

12. The method of claim 11, wherein the weight function is used to calculate a bounding box displacement vector based on a weighted mean distance of the group of HoG features from the center of the bounding box (30).

13. The method of claim 12, wherein the position of the bounding box (30) is displaced by the bounding box displacement vector.

14. The method of claim 12, wherein the position of the bounding box (30) is displaced by the bounding box displacement vector and an additional inertia term consisting of a previously calculated bounding box displacement vector multiplied by a predetermined weighting factor.

15. The method of any one of the preceding claims, wherein the mean shift procedure is repeated iteratively until convergence of the target model and candidate model histograms is reached or a maximum number of iterations is reached.

## Fig. 1

## Fig. 2

Europäisches
Patentamt

European
Patent Office

Office européen
des brevets

# EUROPEAN SEARCH REPORT

**Application Number**

EP 13 18 7850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sourav Garg ET AL: "Mean-Shift based Object Tracking Algorithm using SURF Features", Recent Advances in Circuits, Communications and Signal Processing, 20 February 2013 (2013-02-20), pages 187-194, XP055092709, Cambridge, UK ISBN: 978-1-61-804164-7 Retrieved from the Internet: URL:http://www.wseas.us/e-library/conferences/2013/CambridgeUK/ELSINA/ELSINA-32.pdf [retrieved on 2013-12-10] | 1-4, 8-13,15 | INV. G06K9/00 G06K9/46 |
| Y | * table 1 * * section 3.2, paragraph 1 * * section 3.4, lines 5-10 * ----- | 5-7,14 | |
| L | COMANICIU D ET AL: "REAL-TIME TRACKING OF NON-RIGID OBJECTS USING MEAN SHIFT", PROCEEDINGS 2000 IEEE CONFERENCE ON COMPUTER VISION AND PATTERN RECOGNITION. CVPR 2000. HILTON HEAD ISLAND, SC, JUNE 13-15, 2000; [PROCEEDINGS OF THE IEEE COMPUTER CONFERENCE ON COMPUTER VISION AND PATTERN RECOGNITION], LOS ALAMITOS, CA : IEEE COMP., 13 June 2000 (2000-06-13), pages 142-149, XP001035635, ISBN: 978-0-7803-6527-8 * document is considered incorporated into Garg et al. (Guidelines, Part B, ch. X-11, 9.2.1) * * equations 10, 21, 25 * ----- | | |
| | -/-- | | |

| | | |
|---|---|---|
| | | TECHNICAL FIELDS SEARCHED (IPC) |
| | | G06K |

The present search report has been drawn up for all claims

| Place of search | Date of completion of the search | Examiner |
|---|---|---|
| The Hague | 18 December 2013 | Kollreider, Klaus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 13 18 7850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COMANICIU D ET AL: "KERNEL-BASED OBJECT TRACKING", TRANSACTIONS ON PATTERN ANALYSIS AND MACHINE INTELLIGENCE, IEEE, PISCATAWAY, USA, vol. 25, no. 5, 1 May 2003 (2003-05-01), pages 564-577, XP001185032, ISSN: 0162-8828, DOI: 10.1109/TPAMI.2003.1195991 * equations 17, 20 * | 5,6 | |
| T | HANXUAN YANG ET AL: "Recent advances and trends in visual tracking: A review", NEUROCOMPUTING, ELSEVIER SCIENCE PUBLISHERS, AMSTERDAM, NL, vol. 74, no. 18, 28 July 2011 (2011-07-28) , pages 3823-3831, XP028301666, ISSN: 0925-2312, DOI: 10.1016/J.NEUCOM.2011.07.024 [retrieved on 2011-08-24] * section 2.1 * * section 3.2 * | 1-15 | |
| T | LEIBE B ET AL: "Pedestrian Detection in Crowded Scenes", COMPUTER VISION AND PATTERN RECOGNITION, 2005 IEEE COMPUTER SOCIETY CONFERENCE ON, IEEE, PISCATAWAY, NJ, USA, vol. 1, 20 June 2005 (2005-06-20), pages 878-885, XP010817364, DOI: 10.1109/CVPR.2005.272 ISBN: 978-0-7695-2372-9 * section 3.2 * | 8-10 | TECHNICAL FIELDS SEARCHED (IPC) |

-/--

The present search report has been drawn up for all claims

| Place of search | Date of completion of the search | Examiner |
|---|---|---|
| The Hague | 18 December 2013 | Kollreider, Klaus |

EPO FORM 1503 03.82 (P04C01)

Europäisches
Patentamt

European
Patent Office

Office européen
des brevets

# EUROPEAN SEARCH REPORT

Application Number

EP 13 18 7850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Zhao Liu ET AL: "Robust Mean Shift Tracking with Background Information" In: "Field Programmable Logic and Application", 11 July 2012 (2012-07-11), Springer Berlin Heidelberg, Berlin, Heidelberg, XP055093407, ISSN: 0302-9743 ISBN: 978-3-54-045234-8 vol. 7368, pages 120-129, DOI: 10.1007/978-3-642-31362-2_14, * section 3.2 - section 3.3 * | 7 | |
| Y | AVIDAN S: "Ensemble Tracking", 2005 IEEE CONFERENCE ON COMPUTER VISION AND PATTERN RECOGNITION, SAN DIEGO, CALIFORNIA JUNE 20-JUNE 26, 2005, vol. 2, 20 June 2005 (2005-06-20), pages 494-501, XP010817637, DOI: 10.1109/CVPR.2005.144 ISBN: 978-0-7695-2372-9 * section 3, paragraph 2 * | 7 | |
| Y | LE LU ET AL: "A Nonparametric Treatment for Location/Segmentation Based Visual Tracking", 2007 IEEE CONFERENCE ON COMPUTER VISION AND PATTERN RECOGNITION; 18-23 JUNE 2007; MINNEAPOLIS, MN, USA, 18 June 2007 (2007-06-18), pages 1-8, XP031114233, ISBN: 978-1-4244-1179-5 * Algorithm 1, steps 1-4 * | 7 | |

TECHNICAL FIELDS
SEARCHED (IPC)

-/--

The present search report has been drawn up for all claims

| Place of search | Date of completion of the search | Examiner |
|---|---|---|
| The Hague | 18 December 2013 | Kollreider, Klaus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 13 18 7850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIAN SUN: "A Fast MEANSHIFT Algorithm-Based Target Tracking System", SENSORS, vol. 12, no. 12, 13 June 2012 (2012-06-13), pages 8218-8235, XP055094069, DOI: 10.3390/s120608218 * section 4.1.4, paragraph 4, steps (1)-(2) * * section 4.2, equation 13 * ----- | 14 | |

TECHNICAL FIELDS
SEARCHED        (IPC)

The present search report has been drawn up for all claims

| Place of search | Date of completion of the search | Examiner |
|---|---|---|
| The Hague | 18 December 2013 | Kollreider, Klaus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)